Europäisches Patentamt

European Patent Office

Office européen des brevets

(19)

(11) Veröffentlichungsnummer: **0 036 541**
**B1**

(12) # EUROPÄISCHE PATENTSCHRIFT

(45) Veröffentlichungstag der Patentschrift:
**01.08.84**

(51) Int. Cl.³: **G 01 N 1/02, G 21 C 17/00**

(21) Anmeldenummer: **81101693.0**

(22) Anmeldetag: **07.03.81**

(54) **Fernbedienbares Probenentnahmegerät, insbesondere für die Ermittlung von Aktivitätsprofilen in kontaminierten Materialoberflächen.**

(30) Priorität: **20.03.80 CH 2184/80**

(43) Veröffentlichungstag der Anmeldung:
**30.09.81 Patentblatt 81/39**

(45) Bekanntmachung des Hinweises auf die Patenterteilung:
**01.08.84 Patentblatt 84/31**

(84) Benannte Vertragsstaaten:
**BE FR GB IT SE**

(56) Entgegenhaltungen:
**DE - B - 1 192 522**
**DE - B - 1 284 524**
**US - A - 3 091 967**
**US - A - 3 469 639**
**US - A - 3 498 904**
**US - A - 4 190 513**

(73) Patentinhaber: **Gesellschaft zur Förderung der industrieorientierten Forschung an den Schweizerischen Hochschulen und weiteren Institutionen, Wildhainweg 21, CH-3012 Bern (CH)**

(72) Erfinder: **Hanulik, Jozef, Riedhofstrasse 378, CH-8049 Zürich (CH)**

(74) Vertreter: **Patentanwaltsbureau Scheidegger, Zwicky & Co., Stampfenbachstrasse 48 Postfach, CH-8023 Zürich (CH)**

## Beschreibung

Die Erfindung betrifft ein fernbedienbares Probenentnahmegerät, insbesondere für die Ermittlung von Aktivitätsprofilen in kontaminierten Materialoberflächen und der chemischen Zusammensetzung oberflächennaher Schichten, wobei für jede Probe mittels eines Sensors, der ein mit einem Elektrolyt getränktes Schwämmchen enthält, von dem zu untersuchenden Oberflächenbereich elektrolytisch eine Materialschicht abgetragen und das abgetragene Material für eine nachfolgende chemische Analyse und/oder Analyse seiner Radioaktivität in dem Schwämmchen aufgenommen wird, um aus einer Mehrzahl aufeinanderfolgender Proben ein Aktivitätsprofil des Oberflächenbereichs zu erstellen, sowie ein Verfahren zum Betrieb des Probenentnahmegerätes.

In Reaktoranlagen beispielsweise werden Bauteiloberflächen durch im Kühlmittel mitgeführte Spalt- und Aktivierungsprodukte mit der Betriebsdauer zunehmend kontaminiert, und zufolge dieser Kontamination wird auch die Wartung der Anlage mit der Zeit immer schwieriger, bis schliesslich die Gefahr besteht, dass bei der Wartung eine unzulässig hohe Strahlungsdosis aufgenommen wird und, um dieses zu vermeiden, die Anlage dekontaminiert werden muss. Die Dekontamination eines Reaktor-Kreislaufsystems z.B. ist wegen der Grösse der zu dekontaminierenden Oberfläche ein aufwendiges Vorhaben, das einer eingehenden Vorbereitung bedarf, damit das Dekontaminieren in möglichst kurzer Zeit mit möglichst wenig radioaktivem Abfall und mit einer ausreichenden Sicherheit dafür, dass nach der Dekontamination an keiner Stelle die Restaktivität den zugelassenen Wert überschreitet, durchgeführt werden kann. Für eine solche Vorbereitung ist eine ausreichende Kenntnis der Beschaffenheit der zu dekontaminierenden Oberflächenschicht nötig, und zwar im wesentlichen hinsichtlich der Verteilung der Kontamination sowohl über die Oberfläche wie auch in der Tiefe der Oberflächenschicht und der chemischen Zusammensetzung der Oberflächenschicht. Im allgemeinen liegt die Kontamination in einer auf der Bauteiloberfläche aufliegenden losen Schicht, die leicht durch z.B. Spülen entfernt werden kann, und im oberflächennahen Bereich des Bauteils als im Werkstoff chemisch gebunden und/oder in den Werkstoff eindiffundiert vor. Um die Verteilung der Kontamination in der Tiefe zu erhalten, kann in einem Oberflächenbereich das kontaminierte Material schichtweise abgetragen und für das Material jeder abgetragenen Schicht die Aktivität bestimmt werden. In einem Diagramm die Aktivität gegen die Schichttiefe aufgetragen ergibt ein «Aktivitätsprofil» des untersuchten Oberflächenbereichs, aus dem auch die Tiefe der zu dekontaminierenden Schicht extrapoliert werden kann, um für den Bauteil die Restaktivität zu erhalten. Zum Abtragen der Schichten können an sich verschiedene Methoden angewandt werden, da das abzutragende Material aber verhältnismässig stark radioaktiv sein kann und die abzutragenden Schichten sehr dünn, z.B. nur bis zu einigen μm dick, sein können, ist einem mechanischen Abtragen von Material, wie durch Schleifen, Sandstrahlen usw., ein chemischer, insbesondere elektrolytischer Materialabtrag vorzuziehen. Zum elektrolytischen Abtragen von radioaktivem Material wird vorteilhaft ein mit einem elektrolytgetränkten Kunststoffschwämmchen belegter Elektrodenblock verwendet, der zusammen mit der abzutragenden Materialschicht als Gegenelektrode eine Elektrolysezelle bildet, wobei die Elektrolyse so durchgeführt wird, dass alles abgetragene Material in dem Schwämmchen enthalten ist und sowohl chemisch wie auch hinsichtlich seiner Aktivität analysiert werden kann. Für das Elektrolysieren selbst, d.h. Auswahl des jeweiligen Elektrolyten, Wahl der Elektrolyse-Stromstärke, der Höhe und Polarität der Zellenspannung usw., ergeben sich hierbei keine besonderen Schwierigkeiten, da eine umfassende Spezialliteratur zur Verfügung steht.

Ein Aktivitätsprofil lässt sich nutzbringend selbstverständlich nur dann auswerten, wenn es aus entsprechend einwandfreien Proben und aufgrund ausreichend genauer Messwerte aufgenommen wurde, wobei es sich bei der Probenaufnahme erschwerend auswirkt, dass das Material eben radioaktiv, unter Umständen sogar verhältnismässig stark aktiv, ist und damit auch für die Probenentnahme eine Fernbedienung vorzusehen ist.

Es war daher Aufgabe der Erfindung, ein fernbedienbares Probenentnahmegerät der eingangs genannten Art zu schaffen, mit dem in einem ausgewählten Oberflächenbereich nacheinander mehrere Materialschichten so exakt abgetragen werden können, dass separate, unverfälschte Materialproben erhalten werden, und das bei einem entsprechenden Betrieb auch ausreichend genaue und reproduzierbare Messwerte, insbesondere für den Elektrolysestrom, liefert, die eine befriedigend genaue Bestimmung der jeweils elektrolytisch abgetragenen Schichtdicke zulassen.

Diese Aufgabe wird erfindungsgemäss durch das im Anspruch 1 gekennzeichnete fernbedienbare Probenentnahmegerät und des im Anspruch 11 gekennzeichnete Verfahren zu seinem Betrieb gelöst.

Vorteilhafte Ausbildungen der Erfindung sind in den abhängigen Ansprüchen 2–10 und 12, 13 angegeben.

Im folgenden wird die Erfindung anhand von Ausführungsbeispielen unter Bezugnahme auf die beiliegende Zeichnung näher erläutert.

Es zeigen:

Fig. 1 in schematischer Darstellung ein Probenentnahmegerät nach der Erfindung mit angeschlossener Aussenbeschaltung,
Fig. 2 ein Aktivitätsprofil-Diagramm,
Fig. 3, Fig. 4 und Fig. 5 eine Seitenansicht, Vorderansicht und Aufsicht eines Probenentnahmegerätes nach der Erfindung in einer bevorzugten Ausführungsform und

Fig. 6 eine in diesem Gerät benutzte Hubvorrichtung.

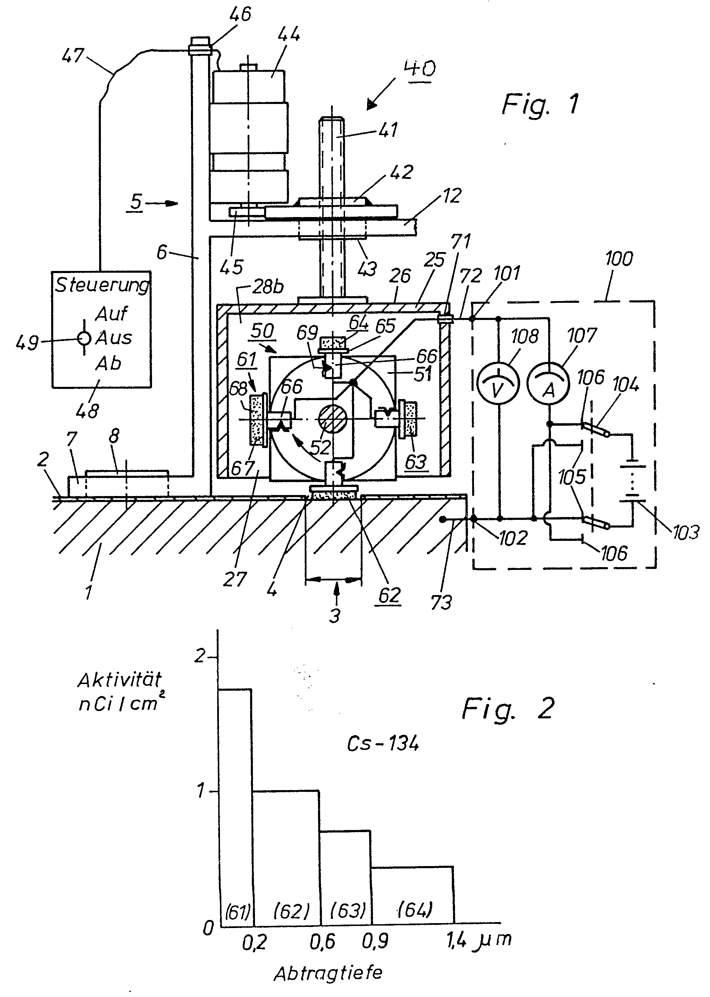

Fig. 1 zeigt in schematischer Darstellung ein Probenentnahmegerät nach der Erfindung, das z.B. auf einem mit einer Oxidschicht 2 bedeckten kontaminierten Bauteil 1 eines Reaktor-Kühlkreislaufs aufgestellt ist, um für die Ermittlung eines Aktivitätsprofils aus dem Oberflächenbereich 3 schichtweise Materialproben zu entnehmen.

Das dargestellte Probenentnahmegerät weist ein gesamthaft mit 5 bezeichnetes Gerätegestell auf, von dem in Fig. 1 der besseren Übersicht wegen nur eine Hälfte gezeigt ist. Das Gerätegestell 5 umfasst im wesentlichen zwei vertikale Tragwände 6, die miteinander im oberen Bereich durch Querträger, wie z.B. eine Tragplatte 12, verbunden sind und an ihren unteren Enden seitlich abstehende Gerätefüsse 7 tragen, die mit herkömmlichen Haftvorrichtungen 8, wie Vakuum-Saugnäpfen oder Haftmagneten, ausgestattet sind, um dem Gerät auf der Unterlage einen festen Stand zu vermitteln.

Im Gerätegestell 5 ist ein quaderförmiges, an der Bodenseite offenes Gehäuse 25 aus Metall oder Kunststoff mittels einer Hubvorrichtung 40 auf und ab bewegbar angeordnet. Zum Heben und Senken des Gehäuses 25 kann irgendeine bekannte zur Fernbedienung eingerichtete steuerbare Hubvorrichtung verwendet werden, vorzugsweise ist jedoch eine Schraubenspindel 41 vorgesehen, die z.B. an der Oberseite 26 des Gehäuses 25 befestigt ist, wobei das Gehäuse 25 in seitlichen Führungen, die in Fig. 1 nicht eingezeichnet sind, geführt sein kann, um ein Drehen um die Spindelachse zu verhindern. Das die Mutterschraube enthaltende Antriebs-Zahnrad 42 für die Schraubenspindel 41 ist in einem in der Tragplatte 12 angeordneten Lagerschild 43 drehbar gelagert und wird von einem Elektromotor 44 mit umschaltbarer Drehrichtung über ein Zahnradgetriebe 45 angetrieben. Eine am Gerätegestell 5 befestigte Anschlussvorrichtung 46 schliesst den Elektromotor 44 an ein Leitungskabel 47 an, das zu einer entfernt angeordneten Steuervorrichtung 48 führt, die im einfachsten Fall für Handbedienung einen Dreistellenschalter 49 für «Auf», «Ab» und «Aus» enthalten kann.

Das Gehäuse 25 enthält einen mit mindestens drei Sensoren, im dargestellten Ausführungsbeispiel mit vier Sensoren 61, 62, 63, 64 bestückten verstellbaren Sensorträger 50. Jeder Sensor 61, 62, 63, 64 besteht aus einem Elektrodenblock 65 zylindrischer Form, der an seiner Rückseite einen Schaft 66 zum Einsetzen des Sensors in den Sensorträger 50 und an seiner Vorderseite ein vorzugsweise zylindrisches Schwämmchen 67 aus z.B. Polyäthylen-Schaumstoff trägt. Die Schwämmchen 67 der einzelnen Sensoren 61, 62, 63, 64 weisen unterschiedliche Durchmesser auf, so dass die als Auflagefläche 68 dienende vordere Stirnfläche der Schwämmchen 67 von Sensor zu Sensor abnimmt, wobei als Auflageflächengrössen etwa 4 cm² bei dem ersten Sensor 61, 3 cm² bei dem zweiten Sensor 62, 2 cm² bei dem dritten Sensor 63 und 1 cm² bei dem vierten Sensor 64 vorgesehen sind, doch können selbstverständlich auch andere Grössenwerte gewählt werden.

Der Sensorträger 50 dient dazu, nacheinander die einzelnen Sensoren 61, 62, 63, 64 in eine Arbeitsstellung zu bringen, in der bei angehobenem Gehäuse 25 die Auflagefläche 68 des Schwämmchens 67 dem zu untersuchenden Oberflächenbereich 3 des kontaminierten Bauteils 1 gegenüberliegt und durch Absenken des Gehäuses 25 zur Auflage auf den Oberflächenbereich gebracht werden kann. Für den Sensorträger 50 kann irgendeine für ein solches Einstellen der Sensoren geeignete Konstruktion gewählt werden. Der dargestellte Sensorträger 50 ist in Form eines Karussells mit einer quadratischen Drehscheibe 51 ausgebildet, in deren vier Seiten die vier Sensoren 61, 62, 63, 64 mit ihren Schäften 66 eingesetzt sind, wobei die Sensoren 61, 62, 63, 64 in der Drehscheibe 51 durch mit den Schäften 66 zusammenwirkende Haltefedern 69 festgehalten sind. Die Karussell-Drehscheibe 51 ist auf einer Welle 52 befestigt, die senkrecht zur Hubrichtung des Gehäuses 25, d.h. senkrecht zur Achse der Schraubenspindel 41 ausgerichtet, drehbar in den Gehäusewänden 28a, 28b gelagert ist. Zum Drehen des Karussells ist eine fernbedienbare oder automatisch wirkende Antriebsvorrichtung vorhanden, die so eingerichtet ist, dass von einer Grundstellung ausgehend, in welcher sich der Sensor 61 mit der grössten Auflagefläche 68 in Arbeitsstellung befindet, durch Drehen vorzugsweise in einer Richtung nacheinander die weiteren Sensoren mit in der Grösse abnehmender Auflagefläche in die Arbeitsstellung gebracht werden, die im übrigen aber beliebiger Art sein kann. So kann z.B. aussen am Gehäuse 25 ein Elektromotor vorgesehen sein, der beispielsweise so gesteuert ist, dass er nur bei angehobenem Gehäuse eingeschaltet werden kann und bei jedem Einschalten die Karussellwelle 51 um einen bestimmten Winkel, im gezeigten Ausführungsbeispiel mit vier Sensoren um 90°, dreht, was durch Vorsehen von Endschaltern und von die Endstellungen des Karussells genau bestimmenden Rastverriegelungen ohne Schwierigkeiten zu erzielen ist.

Die Sensoren 61, 62, 63, 64 sind einpolig durch eine Leiterverbindung 70 an einen durch das Gehäuse 25 hindurchführenden Anschluss 71 angeschlossen, der durch eine elektrische Leitung 72 mit einer entfernt angeordneten Aussenbeschaltung 100 verbunden ist. Zur Erläuterung der Betriebsweise dieses Probenentnahmegeräts sei angenommen, dass die Aussenbeschaltung 100 nur sozusagen in der Primitivausrüstung vorliegt und eine Gleichstromquelle 103 für etwa 12 V Betriebsspannung, einen an die Pole der Gleichstromquelle 103 angeschlossenen Pol-Umschalter 104 mit zwei Festkontaktpaaren 105 und 106, ein Amperemeter 107, das zwischen dem einen Festkontaktpaar 106 und einem ersten Ausgang 101 liegt, und einen zweiten Ausgang 102 umfasst, der an das andere Festkontaktpaar 105 des Pol-Umschalters 104 angeschlossen ist. Der erste Ausgang 101 ist über die Leitung 72, den Geräteanschluss 71 und die Leitungsverbindung 70 mit den Elektrodenblöcken 65 der Sensoren 61, 62, 63, 64 und der zweite Ausgang 102 durch eine Leitung 73 mit dem zu untersuchenden Bauteil 1 verbunden, so dass ein in Wirkstellung befindlicher Sensor, z.B. Sensor 62 der Fig. 1, dessen mit einem Elektrolyt, z.B. einer wässrige Lösung von Oxalsäure, getränktes Schwämmchen 67 auf dem zu untersuchenden Oberflächenbereich 3 des Bauteils 1 aufliegt, zusammen mit dem Bauteil 1 eine Elektrolysezelle bildet, wobei der Elektrolysestrom am Amperemeter 107 und die Zellenspannung an einem an die Ausgänge 101 und 102 angeschlossenen Voltmeter 108 abgelesen werden können. Die Elektrodenblöcke 65 der Sensoren 61, 62, 63, 64 sind dabei aus einem Material oder einer Materialkombination gefertigt, die gewährleistet, dass beim Elektrolysieren unter den vorgegebenen Betriebsbedingungen niemals Metallionen als Verunreinigungen von den Elektrodenblöcken zum die Gegenelektrode bildenden Bauteil 1 gelangen können. Die Elektrodenblöcke 65 können in den meisten Fällen z.B. aus Chromstahl bestehen.

Zur Probenentnahme, die an einem vermutlich stark kontaminierten Reaktor-Bauteil in situ, d.h. im Strahlenschutzraum, stattfinden kann, wird das Probenentnahmegerät mittels von aussen bedienten Greifern so auf den Bauteil aufgesetzt, dass die bodenseitige Öffnung 27 des angehobenen Gehäuses 25 über dem zu untersuchenden Oberflächenbereich liegt. Die Schwämmchen 67 der Sensoren 61, 62, 63, 64 sind mit Elektrolyt getränkt, und der erste Sensor 61 mit der grössten Schwämmchen-Auflagefläche 68 befindet sich in Arbeitsstellung, d.h., er liegt in der Gehäuseöffnung 27. Wenn der Bauteil 1 eine Oxidschicht 2 trägt, wird der Pol-Umschalter 104 so gestellt, dass der Bauteil 1 die Kathode und der Elektrodenblock 65 des Sensors 61 die Anode der Elektrolysezelle ist. Um reproduzierbare Verhältnisse zu schaffen, ist für die Zellenspannung ein Sollwert vorgegeben. Durch Stellen des Dreistellenschalters 49 auf «Ab» wird das Gehäuse 25 mit dem Sensorträger 50 gesenkt, und wenn das Schwämmchen 67 des Sensors 61 die Bauteiloberfläche berührt, wird die Zellen-Istspannung am Voltmeter 108 beobachtet, und sobald die Zellenspannung den vorgegebenen Sollwert erreicht, wird das Gehäuse 25 durch Stellen des Dreistellenschalters 49 auf «Aus» angehalten und ein Zeitschalter, z.B. eine Stoppuhr, für eine Zeitmessung in Gang gesetzt. Durch die Elektrolysezelle mit dem im vorstehenden Beispiel eine Auflagefläche von 4 cm² aufweisenden Schwämmchen wird ein konstanter Elektrolysestrom von z.B. 0,4 A geleitet, wobei eine elektrochemische Reduktion des Metalloxids der Oxidschicht 2 entsprechend den an der Kathode ablaufenden Vorgängen

$$2H^+ + 2e \rightarrow 2\,H \text{ und } 2\,H + MeO \rightarrow Me\,(Metall) + H_2O$$

stattfindet. Wenn die Oxidschicht 4 aufgelöst ist, was durch einen starken Anstieg der Zellenspannung am Voltmeter 108 signalisiert wird, wird der Zeitschalter gestoppt und das Gehäuse 25 durch Umschalten des Dreistellenschalters 49 auf «Auf» hochgefahren. Da jetzt im zu untersuchenden Oberflächenbereich 3 Metall ansteht, wird der Pol-Umschalter 104 umgestellt, so dass der Bauteil 1 Anode ist. Der zweite Sensor 62 wird in Arbeitsstellung gebracht, und, wie vorstehend beschrieben, das Gehäuse 25 wird gesenkt, bis bei der Zellenspannung der Istwert gleich dem vorgegebenen Sollwert ist. Dann wird während einer Zeitspanne t elektrolysiert (und dabei das Produkt Elektrolysestrom I mal Zeit t festgestellt), wobei von dem Bauteil 1 eine Metallschicht abgetragen und das abgetragene Metall an dem Elektrodenblock abgelagert und im Schwämmchen aufgenommen wird. Für die theoretische Beziehung zwischen geflossener Elektrizitätsmenge und den im Sensor abgelagerten Reaktionsprodukten gilt bekanntlich das Faradaysche Gesetz

$$I \cdot t = \frac{m}{M} \cdot n \cdot F,$$

wobei m das Gewicht der abgelagerten Reaktionsprodukte, M das Molekulargewicht, n die Wertigkeitsänderung und F die Faraday-Konstante bedeuten, doch treten in der Praxis im allgemeinen Abweichungen davon auf, die in Stromausbeute-Eichkurven ohne Schwierigkeiten und mit gewünschter Genauigkeit erfasst werden können.

Mit dem dritten und vierten Sensor 63 bzw. 64 werden dann noch zwei weitere Metallschichten von dem Bauteil abgetragen. Aus den erhaltenen Messwerten kann die Dicke der Oxidschicht und der drei abgetragenen Metallschichten anhand von Eichkurven ermittelt werden.

Nach der so erfolgten Probenentnahme wird zweckmässig das Gehäuse 25 mit einem Deckel verschlossen, aus dem Gerätegestell herausgenommen und zur Bestimmung der Aktivität der von den Schwämmchen der einzelnen Sensoren 61, 62, 63, 64 aufgenommenen radioaktiven Substanzen und/oder zur Bestimmung der sich oft mit der Tiefe ändernden chemischen Zusammensetzung der oberflächennahen Materialschichten zu entsprechenden Messgeräten gebracht.

Fig. 2 zeigt ein so erhaltenes Aktivitätsprofil, wobei auf der Abszisse die Abtragtiefe (Schichtdicke) in μm und auf der Ordinate die Aktivität in nCi/cm² aufgetragen ist.

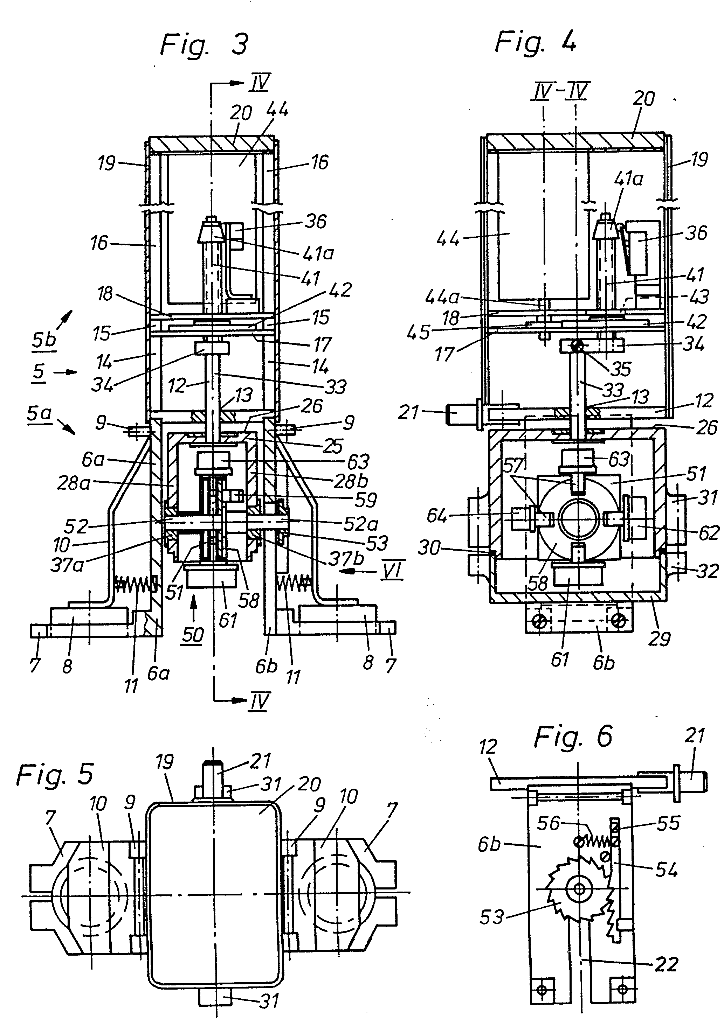

In den Fig. 3 bis 6 ist ein praktisches Ausführungsbeispiel für ein Probenentnahmegerät nach der Erfindung dargestellt, das im wesentlichen wie das in Fig. 1 gezeigte Gerät aufgebaut ist.

Das Gerätegestell 5 umfasst einen unteren Teil 5a, der zur Aufnahme des Gehäuses 25 mit dem als Karussell ausgebildeten Sensorträger 50 (Fig. 1) dient, und einen Oberteil 5b, in welchem die Hubvorrichtung mit der Schraubenspindel 41, den Antriebszahnrädern 42, 45 und dem Elektromotor 44 mit Zubehör untergebracht ist. Bei dem Gestell-Unterteil 5a sind zwei entsprechend kurze, plattenförmige Tragwände 6 oben miteinander durch eine Tragplatte 12 verbunden und unten mit je einem seitlich abstehenden Gerätefuss 7 versehen. Die Gerätefüsse 7 sind mit Haftmagneten 8 ausgerüstet. Für jeden Haftmagneten 8 ist ein in einem Lagerbock 9 an der Tragwand 6 schwenkbar gelagerter Magnethebel 10, mit dem der Haftmagnet 8 angehoben und damit die magnetische Haftung gelöst wird, wenn der Magnethebel 9 gegen die Kraft einer Rückstellfeder 11 an die Tragwand angedrückt wird, vorhanden. Der Gestell-Oberteil 5b ist aus in den vier Ecken der Lagerplatte 12 angeordneten Distanzbolzen 14, 16 und Distanzhülsen 15 und zwischen diesen angeordneten Lagerplatinen 17, 18 zusammengesetzt, wie es aus Fig. 3 ersichtlich ist. Auf den Gestell-Oberteil 5b kann eine Haube 19 mit Haubendeckel 20 aufgesetzt werden, um die innenliegenden Bauteile zu schützen. Die Tragplatte 12 weist einen seitlich abstehenden Anschlussbolzen 21 (Fig. 4) auf, an den das Gestänge einer üblichen fernbedienbaren Einrichtung zur Handhabung des Gerätes angeschlossen werden kann.

Das verhältnismässig flache, quaderförmige Gehäuse 25 mit der bodenseitigen Öffnung 27 ist mit einem Gehäusedeckel 29 (Fig. 4) verschliessbar, der zusammen mit einer Dichtung 30 von unten her auf das Gehäuse 25 aufgesetzt werden kann und durch in seitlichen Ansätzen 31, 32 am Gehäuse 25 und am Gehäusedeckel 29 geführte Schrauben festgehalten wird. Das Gehäuse 25 mit dem Gehäusedeckel 29 bildet eine den Sensorträger mit den Sensoren 61, 62, 63, 64 enthaltende geschlossene Kassette, die zum Tränken der Sensor-Schwämmchen mit Elektrolyt gefüllt ist und aus der der Elektrolyt durch Abnehmen des Gehäusedeckels entfernt wird, wenn sich das Probenentnahmegerät am Untersuchungsort befindet.

Das Antriebs-Zahnrad 42 für die Schraubenspindel 41 ist mittels eines Lagerschildes 43 in der oberen Lagerplatine 18 (Fig. 4) aussermittig gelagert. Die Motorwelle 44a des oberhalb der oberen Lagerplatine 18 im Gestelloberteil 5b befestigten Elektromotors 44 trägt ein Abtriebszahnrad 45, das in den beiden Lagerplatinen 17 und 18 gelagert ist und mit dem Antriebszahnrad 42 kämmt. An der Oberseite 26 des Gehäuses 25 ist eine Stange 33 befestigt, die durch eine Bohrung 13 in der Mitte der Tragplatte 12 geführt und an ihrem oberen Ende durch ein Kupplungsstück 34 mit dem unteren Ende der Schraubenspindel 41 verbunden ist, so dass sich die Schraubenspindel nicht um ihre Achse drehen kann. Die Stange 33 ist im Kupplungsstück 34 lösbar befestigt, z.B. mittels einer Schraube 35, um (nach Lösen der Schraube 35) das Gehäuse 25 aus dem Gerätegestell herausnehmen zu können. Die Hubhöhe der Schraubenspindel 41 ist durch einen Endschalter 36 bestimmt, der bei auf Aufwärtsbewegen geschaltetem Motor von dem entsprechend ausgebildeten oberen Ende 41a der Schraubenspindel 41 betätigt wird und dann den Motor aus- oder auf Abwärtsbewegung umschaltet. Aus Sicherheitsgründen, um eine Beschädigung des Geräts auszuschliessen, kann auch der Abwärtshub durch einen Endschalter begrenzt sein.

Die Welle 52 des Sensorträgers 50 ist mittels Lagerflanschen 37a, 37b in den einander gegenüberliegenden Seitenwänden 27a, 27b des Gehäuses 25 drehbar gelagert und ragt aus der einen Gehäusewand 28b (Fig. 3) heraus. Damit das Gehäuse 25 gehoben und gesenkt werden kann, weist die zu dieser Gehäusewand 28b gehörige Gestell-Tragwand 6 einen Längsschlitz 22 auf (Fig. 6), der unten offen ist, um das Gehäuse 25 in den Gestellunterteil 5a einsetzen und herausnehmen zu können.

Am vorstehenden Ende 52a der Sensorträger-Welle 52 ist ein Schaltrad 53 befestigt, und aussen an der Tragwand 6b (Fig. 6) ist eine Schaltstange 54 um einen Drehpunkt 55 schwenkbar angeordnet, die von einer Vorspannfeder 56 an das Schaltrad 53 angedrückt ist. Bei jedem Aufwärtshub des Gehäuses 25 wird das Schaltrad 53 durch die Schaltstange 54 um 90° gedreht und so der jeweils nächstfolgende Sensor in seine Arbeitsstellung gebracht.

Die etwa quadratische Drehscheibe 51 des Sensorträgers 50 hat in der Mitte jeder Seite eine Ausnehmung 57 (Fig. 4), in die jeweils ein Sensor mit seinem Schaft 66 (Fig. 1) eingesetzt ist. Auf der einen Stirnseite trägt die Drehscheibe 51 eine Printplatte 58 mit in Kontakt mit den Sensor-Schäften stehenden Kontaktbahnen, die der besseren Übersicht wegen nicht dargestellt sind, und im Innern des Gehäuses 25 ist eine Kontaktfeder 59 befestigt (Fig. 3), die über die Printplatte 58 jeweils den in Arbeitsstellung befindlichen Sensor an den Anschluss 71 (Fig. 1) anschliesst.

Die vorstehend beschriebene bevorzugte Ausführungsform eines Probenentnahmegeräts nach der Erfindung zeichnet sich durch besonders einfache Handhabung aus, was insbesondere bei der Probenentnahme in situ von Bedeutung ist, und gewährleistet einen zuverlässigen Betrieb, wobei trotz der Robustheit des Gerätes insbesondere das Auflegen der Sensorschwämmchen auf den zu untersuchenden Oberflächenbereich so exakt erfolgt, dass die verschieden grossen Auflageflächen konzentrisch aufeinanderliegen und so beim Abtragen der einzelnen Probenschichten sowohl eine Kontamination des Randes einer Schicht durch aus der darüberliegenden Schicht mitgeschlepptes aktives Material wie auch «Krater-Effekte» beim Elektrolysieren vermieden und reproduzierbare Ergebnisse erhalten werden.

Das Probenentnahmegerät kann auch zur Vornahme sogenannter Wischtests benutzt werden, bei denen auf der Bauteiloberfläche aufliegendes und verhältnismässig leicht entfernbares Material durch Abwischen aufgenommen wird. Das dazu benutzte Schwämmchen hat dann vorzugsweise eine grössere, etwa doppelte bis dreifache Dicke.

Es kann vorkommen, dass schwerradioaktive Partikel (einige Röntgen) anfallen, die z.B. die Messungen verfälschen würden. Solche Partikel oder Partikelkonglomerate lassen sich ebenfalls mit dem Probenentnahmegerät problemlos entfernen. So kann man z.B. auf den Elektrodenblock eines Sensors einen mit einer Klebeschicht versehenen Belag aufbringen und mittels der Klebeschicht die im zu untersuchenden Oberflächenbereich vorhandenen schwerradioaktiven Partikel aufnehmen und zur Untersuchung z.b. auf eine photographische Platte übertragen.

Die Aussenbeschaltung für ein solches Probenentnahmegerät wird zweckmässig in einem leicht zu bedienenden Aggregat zusammengefasst. Der Antriebsmotor für die Spindel wird vorzugsweise ein Niederspannungs-Gleichstrommotor sein, so dass er an die Gleichstromquelle für die Sensoren mitangeschlossen werden kann.

## Patentansprüche

1. Fernbedienbares Probenentnahmegerät, insbesondere für die Ermittlung von Aktivitätsprofilen in kontaminierten Materialoberflächen und der chemischen Zusammensetzung von oberflächennahen Schichten, wobei für jede Probe mittels eines Sensors, der ein mit einem Elektrolyt getränktes Schwämmchen (67) enthält, von dem zu untersuchenden Oberflächenbereich (3) elektrolytisch eine Materialschicht abgetragen und das abgetragene Material für eine nachfolgende chemische Analyse und/oder Analyse seiner Radioaktivität in dem Schwämmchen (67) aufgenommen wird, um aus einer Mehrzahl aufeinanderfolgender Proben ein Aktivitätsprofil des Oberflächenbereichs (3) zu erstellen, dadurch gekennzeichnet, dass in einem Gerätegestell (5) ein Sensorträger (50), der wenigstens drei mit einem gemeinsamen Stromanschluss (71) verbundene Sensoren (61, 62, 63, 64) mit in der Grösse ihrer Auflagefläche (68) abgestuften Schwämmchen (67) aufweist, auf und ab bewegbar angeordnet ist und am Gerätegestell (5) fernbedienbare Stell- (52, 53, 54) und Hub-Vorrichtungen (41, 42, 44, 45) vorhanden sind, um die einzelnen Sensoren (61, 62, 63, 64) nacheinander in der Reihenfolge abnehmender Schwämmchen-Auflagefläche (68) in eine Arbeitsstellung zu bringen und nach dem jeweiligen Einstellen eines Sensors in die Arbeitsstellung den eingestellten Sensor mit dem Sensorträger (50) in eine Wirkstellung mit definiertem Andruck seines Schwämmchens (67) an den zu untersuchenden Oberflächenbereich (3) abzusenken.

2. Probenentnahmegerät nach Anspruch 1, dadurch gekennzeichnet, dass der Sensorträger (50) in einem im Gerätegestell (5) auf und ab bewegbaren Gehäuse (25) angeordnet ist, das auf der Unterseite (27) offen und durch einen Gehäusedeckel (29) zu einer geschlossenen Transport-Kassette für die Sensoren (61, 62, 63, 64) verschliessbar ist.

3. Probenentnahmegerät nach Anspruch 2, dadurch gekennzeichnet, dass das mit dem Gehäusedeckel (29) abgeschlossene Gehäuse (25) flüssigkeitsdicht ist und vor der Probenentnahme zum Tränken der Sensor-Schwämmchen (67) mit Elektrolyt gefüllt ist.

4. Probenentnahmegerät nach einem der vorangehenden Ansprüche, dadurch gekennzeichnet, dass der Sensorträger (5) ein in einem bzw. dem Gehäuse (25) um eine Drehachse drehbares Karussell mit einer Drehscheibe (51) ist, auf deren Umfang die Sensoren (61, 62, 63, 64) mit gleichem Abstand voneinander angeordnet sind, und dass die Stellvorrichtung (53, 54) zum Einstellen der Sensoren in die Arbeitsstellung zum Drehen des Karussells um die Drehachse eingerichtet ist.

5. Probenentnahmegerät nach Anspruch 4, dadurch gekennzeichnet, dass das Karussell im Gehäuse (25) um eine zur Hubrichtung des Gehäuses (25) im Gerätegestell (5) senkrechten Drehachse drehbar ist, wobei sich jeder Sensor (61, 62, 63, 64) in seiner Arbeitsstellung befindet, wenn er beim Drehen des Karussells in dessen unterem Kulminationspunkt angelangt ist.

6. Probenentnahmegerät nach Anspruch 5, dadurch gekennzeichnet, dass das Karussell eine im Gehäuse (25) drehbar gelagerte Welle (52) aufweist, die an einem aus dem Gehäuse (25) herausragenden Wellenende (52a) ein Schaltrad (53) trägt, das mit einer am Gerätegestell (5) schwenkbar angeordneten Schaltstange (54) zusammenwirkt, um beim Aufwärtshub des Gehäuses (25) das Karussell um eine Sensorposition weiter zu drehen.

7. Probenentnahmegerät nach einem der vorangehenden Ansprüche, dadurch gekennzeichnet, dass das Gerätegestell (5) zum Auf- und Abbewegen des Sensorträgers (50) mit einer von einem Motor (44) angetriebenen Schraubenspindel (41) ausgerüstet ist.

8. Probenentnahmegerät nach Anspruch 7, dadurch gekennzeichnet, dass die Schraubenspindel (41) von einem Elektromotor angetrieben wird und der Schraubenspindel (41) in der obersten Stellung ein Endschalter (36) zugeordnet ist, durch dessen Betätigung der Antriebsmotor (44) ab- oder in der Drehrichtung umgeschaltet wird.

9. Probenentnahmegerät nach einem der vorangehenden Ansprüche, dadurch gekennzeichnet, dass das Gerätegestell (5) mit Gerätefüssen (7) ausgerüstet ist, die Vakuum-Saugnäpfe oder Haftmagnete (8) zum Festhalten des Gerätegestells auf einer Unterlage enthalten.

10. Probenentnahmegerät nach einem der vorangehenden Ansprüche, dadurch gekennzeichnet, dass der Sensorträger (50) mit vier auswechselbaren Sensoren (61, 62, 63, 64) ausgestattet ist.

11. Verfahren zum Betrieb des Probenentnahmegerätes nach Anspruch 1, bei welchem ein Sensor mit elektrolytgetränktem und in Wirkstellung auf einen Bruchteil seiner Höhe zusammengedrücktem Schwämmchen (67) und ein zu untersuchender Oberflächenbereich (3) eine unter Betriebsspannung stehende Elektrolysezelle bilden, dadurch gekennzeichnet, dass man einen Zellenspannungs-Sollwert festlegt und dass man nach dem Aufstellen des Probenentnahmegerätes über einem zu untersuchenden Oberflächenbereich (3) bei mit Elektrolyt getränktem Schwämmchen (67) für jede Probenentnahme bei eingeschalteter Betriebsspannung den Sensorträger (50) mit in Arbeitsstellung befindlichem Sensor (61, 62, 63, 64) so lange auf den Oberflächenbereich (3) hin absenkt, bis die Zellenspannung den Sollwert erreicht hat, und dann den Sensorträger (50) für die Dauer der Probenentnahme in dieser Einstellung belässt.

12. Verfahren nach Anspruch 11, dadurch gekennzeichnet, dass das Absenken des Sensorträgers (50) über einen Soll-Istwert-Vergleich automatisch gesteuert wird.

13. Verfahren nach Anspruch 11 oder 12 zum Betrieb eines Probenentnahmegerätes nach Anspruch 3, dadurch gekennzeichnet, dass man vor dem Entnehmen durch Abnehmen des Gehäusedeckels (29) den Elektrolyt aus dem Gehäuse (25) entleert und durch Abklopfen und/oder Auspressen überschüssigen Elektrolyt von den Schwämmchen (67) der Sensoren (61, 62, 63, 64) entfernt.

**Revendications**

1. Appareil de prélèvement d'échantillons télécommandé, en particulier pour la détermination des profils d'activité dans les surfaces de matières contaminées, et de la composition chimique de couches proches de la surface, dans lequel, pour chaque échantillon, une couche de matière est prélevée par voie électrolytique sur la région de surface à examiner (3) au moyen d'un capteur qui contient une petite éponge (67) imprégnée d'un électrolyte, et la matière prélevée est prise dans la petite éponge (67) du capteur, pour l'analyse chimique consécutive et/ou l'analyse de sa radio-activité, pour produire, à partir d'un grand nombre d'échantillons successifs, un profil d'activité de la région de surface (3), caractérisé en ce que, dans un bâti (5) de l'appareil, est monté mobile en montée et en descente un support de capteurs (50) qui présente au moins trois capteurs (61, 62, 63, 64) reliés à un raccordement électrique commun (71) et munis de petites éponges (67) échelonnées en grandeur de leurs surfaces de portée (68), et sur le bâti (5) de l'appareil des dispositifs télécommandés de positionnement (52, 53, 54) et d'élévation (41, 42, 44, 45) sont prévus pour placer les différents capteurs (61, 62, 63, 64) l'un après l'autre dans une position de travail, dans l'ordre des grandeurs décroissantes des surfaces de portée (68) des éponges (67) et pour, après le réglage de chaque capteur dans la position de travail, abaisser le capteur réglé avec le support de capteurs (50) dans une position active comportant une pression définie de sa petite éponge (67) sur la région de surface à examiner (3).

2. Appareil de prélèvement d'échantillons suivant la revendication 1, caractérisé en ce que le support de capteurs (50) est monté dans un boîtier (25) mobile en montée et descente dans un bâti d'appareil (5) qui est ouvert à sa face inférieure (27) et peut être fermé par un couvercle de boîtier (29) pour constituer une cassette de transport fermée pour les capteurs (61, 62, 63, 64).

3. Appareil de prélèvement d'échantillons suivant la revendication 2, caractérisé en ce que le boîtier (25), fermé avec le couvercle de boîtier (29), est étanche aux liquides et est rempli d'électrolyte avant le prélèvement d'échantillons pour l'imprégnation des petites éponges (67) des capteurs.

4. Appareil de prélèvement d'échantillons suivant l'une des revendications précédentes, caractérisé en ce que le support de capteurs (5) est un carrousel monté rotatif autour d'un axe de rotation dans un boîtier ou dans le boîtier (25) qui comporte un disque tournant (51) sur la périphérie duquel les capteurs (61, 62, 63, 64) sont disposés à espacement régulier, et en ce que le dispositif de positionnement (53, 54) destiné à régler les capteurs dans la position de travail est agencé pour faire tourner le carrousel autour de l'axe de rotation.

5. Appareil de prélèvement d'échantillons suivant la revendication 4, caractérisé en ce qu'on peut faire tourner le carrousel dans le boîtier (25) autour d'un axe de rotation perpendiculaire à la direction d'élévation du boîtier (25) dans le bâti (5) de l'appareil, chaque capteur (61, 62, 63, 64) se trouvant dans sa position de travail lorsque, lors de la rotation du carrousel, il est parvenu à son point de culmination inférieur.

6. Appareil de prélèvement d'échantillons suivant la revendication 5, caractérisé en ce que le carrousel présente un arbre (52) monté rotatif dans le boîtier (25) qui porte, sur un bout d'arbre (52a) qui émerge à l'intérieur du boîtier (25), une roue de commande (53) qui coopère avec une tige de commande (54) montée pivotante sur le bâti (5) de l'appareil, pour faire tourner le carrousel autour d'une position de capteur lors de la course ascendante du boîtier (25).

7. Appareil de prélèvement d'échantillons suivant lune des revendications précédentes, caractérisé en ce que le bâti (5) de l'appareil est équipé d'une vis (41) entraînée par un moteur (44) pour le déplacement ascendant et descendant du support de capteurs (50).

8. Appareil de prélèvement d'échantillons suivant la revendication 7, caractérisé en ce que la vis (41) est entraînée par un moteur électrique, et à cette vis (41) est associé, dans la position extrême supérieure, un commutateur de fin de course (36) par l'actionnement duquel le moteur d'entraînement (44) est mis à l'arrêt ou inversé en sens de rotation.

9. Appareil de prélèvement d'échantillons suivant l'une des revendications précédentes, caractérisé en ce que le bâti (5) de l'appareil est équipé de pieds d'appareil (7) qui contiennent des ventouses ou des aimants de fixation (8) pour fixer le bâti de l'appareil sur un support.

10. Appareil de prélèvement d'échantillons suivant l'une des revendications précédentes, caractérisé en ce que le support de capteurs (50) est équipé de quatre capteurs interchangeables (61, 62, 63, 64).

11. Procédé de mise en action de l'appareil de prélèvement d'échantillons suivant la revendication 1, dans lequel un capteur muni d'une petite éponge (67) imprégnée d'électrolyte et, en position active, comprimée à une fraction de sa hauteur, et une région de surface à examiner (3) forment ensemble une cellule d'électrolyse mise sous tension de service, caractérisé en ce qu'on détermine une valeur de consigne de la tension de la cellule et en ce que, après avoir posé l'appareil de prélèvement d'échantillons sur une zone de surface à examiner (3), la petite éponge (67) prévue pour chaque prélèvement d'échantillon étant imprégnée d'électrolyte et la tension de service étant mise en circuit, on abaisse le support de capteurs (50), avec un capteur (61, 62, 63, 64) placé en position de travail, sur la région de surface (3) jusqu'à ce que la tension de cellule ait atteint la valeur de consigne, et, ensuite, on laisse le support de capteurs (50) dans ce réglage pour la durée du prélèvement d'échantillons.

12. Procédé suivant la revendication 11, caractérisé en ce que l'abaissement du support de capteurs (50) est commandé automatiquement par une comparaison valeur de consigne-valeur réelle.

13. Procédé suivant la revendication 11 ou 12, pour l'utilisation d'un appareil de prélèvement d'échantillons suivant la revendication 3, caractérisé en ce que, avant le prélèvement, on vide l'électrolyte du boîtier (25) en enlevant le couvercle (29) du boîtier, et on élimine l'électrolyte excédentaire des petites éponges (67) des capteurs (61, 62, 63, 64) par secouage et/ou essorage.


## Claims

1. A remotely operable sample-taking appliance, especially for ascertaining radioactivity profiles in contamination material surfaces and the chemical composition of strata close to the surface, in which a layer of material is removed electrolytically from the surface region (3) to be examined for each sample by means of a sensor containing a small sponge (67) impregnated with an electrolyte, and the removed material is absorbed in the sponge (67) for a subsequent chemical analysis and/or analysis of its radioactivity, in order to produce an activity profile of the surface region (3) from a plurality of successive samples, characterised in that a sensor carrier (50), which comprises at least three sensors (61, 62, 63, 64) connected with a common current connector (71) and having small sponges (67) with graduated sizes of their application areas (68), is arranged for upward and downward movement in an appliance framework (5) and remotely operable setting devices (52, 53, 54) and lifting devices (41, 42, 44, 45) are present on the appliance chassis (5) in order to bring the individual sensors (61, 62, 63, 64) successively in the sequence of decreasing sponge application area (68) into a working position and, after the setting of a given sensor into the working position, to lower the adjusted sensor with the sensor carrier (50) to an operative position with defined application pressure of its sponge (67) against the surface region (3) to be examined.

2. A sample-taking appliance according to Claim 1, characterised in that the sensor carrier (50) is arranged in a housing (25) which is movable upwards and downwards in the frame (5) of the appliance, which housing is open on its underside (27) and is closable by a housing cover (29) to form a closed transport unit for the sensors (61, 62, 63, 64).

3. A sample-taking appliance according to Claim 2, characterised in that the housing (25) closed by the housing cover (29) is liquid-tight and is filled with electrolyte for the impregnation of the sensor sponge (67) before the sample-taking operation.

4. A sample-taking appliance according to one of the preceding Claims, characterised in that the sensor carrier (5) is a turntable rotatable about a rotation axis in a or the housing (25) and having a rotary plate (51) at the circumference of which the sensors (61, 62, 63, 64) are equi-spacedly arranged at equal distances from one another, and in that the setting device (53, 54) for the setting of the sensors into the working position is arranged for rotation of the turntable about the axis of rotation.

5. A sample-taking appliance according to Claim 4, characterised in that the turntable is rotatable in the housing (25) about an axis of rotation perpendicular to the direction of travel of the housing (25) in the framework (5) of the appliance while each sensor (61, 62, 63, 64) is disposed in its working position when in the course of the rotation of the turntable it has arrived at the lower point of culmination of the latter.

6. A sample-taking appliance according to Claim 5, characterised in that the turntable comprises a shaft (52) rotatably mounted in the housing (25) and carrying, on a shaft end (52a) protruding from the housing (25), a stepping wheel (53) which cooperates with a shift rod (54) pivotably arranged on the framework (5) of the appliance to rotate the turntable further by one sensor position during the upward stroke of the housing (25).

7. A sample-taking appliance according to one of the preceding Claims, characterised in that the framework (5) of the appliance is equipped with a screw jack (41) driven by a motor (44) for the upward and downward movement of the sensor carrier (50).

8. A sample-taking appliance according to Claim 7, characterised in that the screw jack (41) is driven by an electric motor and at the uppermost position the screw jack (41) is associated with a limit switch (36) actuation of which switches the drive motor (44) off or reverses its direction of rotation.

9. A sample-taking appliance according to one of the preceding Claims, characterised in that the framework (5) of the appliance is equipped with feet (7) which comprises vacuum suction cups or holding magnets (8) for holding the framework of the appliance fast on a base.

10. A sample-taking appliance according to one of the preceding Claims, characterised in that the sensor carrier (50) is equipped with four exchangeable sensors (61, 62, 63, 64).

11. A method of operating the sample-taking appliance according to Claim 1, in which a sensor with an electrolyte-impregnated sponge (67) that in its operating position is compressed to a fraction of its thickness, and a surface region (3) under investigation are forming an electrolytic cell at operational voltage characterised in that a desired cell voltage value is established for the operating condition of the sensor; and in that, after the sample-taking appliance has been set up over the surface region (3) under investigation and with the operational voltage switched on, for each taking of a sample with the electrolyte-impregnated sponge (67), the sensor carrier (50) with a sensor (61, 62, 63, 64) disposed in the working position is lowered on to the surface region (3) until the cell voltage has reached the desired value, and then the sensor carrier (5) is left in this setting for the duration of the sample-taking.

12. A method according to Claim 11, characterised in that the lowering of the sensor-carrier (50) is controlled automatically by means of a comparison of the desired and actual values.

13. A method according to Claim 11 or 12 for the operation of a sample-taking appliance according to Claim 3, characterised in that, before the sampling, the electrolyte is discharged from the housing (25) by removal of the housing cover (29) and excess electrolyte is removed from the sponges (67) of the sensors (61, 62, 63, 54) by tapping them or squeezing them out.

Fig. 1

Steuerung

Auf
Aus
Ab

Fig. 2

Cs – 134

Aktivität
$nCi / cm^2$

2

1

0

(61)  (62)  (63)  (64)

0,2   0,6   0,9        1,4 $\mu m$

Abtragtiefe

**Fig. 3**

**Fig. 4**

**Fig. 5**

**Fig. 6**